# EUROPEAN PATENT APPLICATION

(11) **EP 4 779 501 A1**
(43) Date of publication of application: **22.07.2026**
(21) Application number: 24867396.4
(22) Date of filing: 14.09.2024
(51) Int. Cl.: G06F 21/57

(54) **TEE-BASED TRUSTED COMPUTING PLATFORM, AND METHOD FOR EXECUTING PROTECTION TASK**

(30) Priority: 19.09.2023 CN 202311215091
(71) Applicant: HUAWEI TECHNOLOGIES CO., LTD., Shenzhen 518129 (CN)
(72) Inventor: ZHU, Shaofeng, Shenzhen, Guangdong 518129 (CN); ZHANG, Xiaohu, Shenzhen, Guangdong 518129 (CN); ZHANG, Qinglong, Shenzhen, Guangdong 518129 (CN)
(74) Representative: Goddar, Heinz J.
(86) International application number: PCT/CN2024/119150
(87) International publication number: WO 2025/060988

(57) **Abstract**

A TEE-based trusted compute platform, a method for executing a security protection task, and a compute device are provided. The trusted compute platform includes a compute part and a protection part. The protection part includes: a trusted software base TSB; and a trusted platform control module TPCM, where the TPCM includes a TPCM functional component and a lightweight TPCM management component, the TPCM functional component is configured to perform security protection on the compute part, and the lightweight TPCM management component is configured to perform life cycle management on the TSB and the TPCM functional component. The trusted compute platform can improve security of the TPCM.

## Description

This application claims priority to Chinese Patent Application No. 202311215091.6, filed with the China National Intellectual Property Administration on September 19, 2023 and entitled "TEE-BASED TRUSTED COMPUTE PLATFORM AND METHOD FOR EXECUTING PROTECTION TASK", which is incorporated herein by reference in its entirety.

### TECHNICAL FIELD

This application relates to the security field, and more specifically, to a TEE-based trusted compute platform, a method for executing a protection task, and a compute device.

### BACKGROUND

A trusted execution environment (trusted execution environment, TEE) is one of mainstream security architectures of modern processors. A system architecture of the TEE includes a non-secure world (non-secure world, NWd) and a secure world (secure world, SWd). The TEE is an independent and isolated secure running environment. Because the TEE provides an isolated environment for storing sensitive information of a user (for example, code and data of the user), the TEE provides more secure space for execution of the code and the data, and ensures confidentiality and security of the sensitive information of the user (for example, the code and the data of the user).

A trusted compute platform includes a compute part and a protection part, and therefore the trusted compute platform has two parallel features: computation and protection. The protection part includes a trusted software base (trusted software base, TSB) and a trusted platform control module (trusted platform control module, TPCM). In a related solution of a TEE-based trusted compute platform, a TPCM includes a TPCM OS, and the TPCM OS includes a TPCM functional component and a TEE OS. A software part of the TPCM includes TEE OS code, and a scale of the TEE OS code is too large. As a result, the TPCM has a large attack surface and low security, security audit and security authentication on the TPCM barely succeed, and the TPCM cannot be used as a root of trust.

Therefore, how to improve security of the TPCM on the trusted compute platform becomes a technical problem that urgently needs to be resolved.

### SUMMARY

This application provides a TEE-based trusted compute platform, a method for executing a protection task, and a compute device. The trusted compute platform can improve security of a TPCM.

According to a first aspect, a trusted execution environment TEE-based trusted compute platform is provided. The trusted compute platform includes a compute part and a protection part. The protection part includes a trusted software base TSB; and a trusted platform control module TPCM, where the TPCM includes a TPCM functional component and a lightweight TPCM management component, the TPCM functional component is configured to perform security protection on the compute part, and the lightweight TPCM management component is configured to perform life cycle management on the TSB and the TPCM functional component.

In the system architecture of the TEE-based trusted compute platform provided above, the TPCM includes the TPCM functional component and the lightweight TPCM management component. The lightweight TPCM management component is used as basic software of the TPCM, and is responsible for managing the TSB and the TPCM functional component on the trusted compute platform. Because the TPCM management component included in the basic software of the TPCM is lightweight, a code scale of the TPCM management component is small, and a code scale of the TPCM is small. Therefore, an attack surface of the TPCM can be reduced and security of the TPCM can be improved in design.

With reference to the first aspect, in some implementations of the first aspect, the TPCM functional component is a module in the lightweight TPCM management component, and the lightweight TPCM management component includes the TPCM functional component.

With reference to the first aspect, in some implementations of the first aspect, the TPCM functional component is an independent TEE instance.

In the foregoing technical solution, the TPCM functional component is deployed as an independent TEE instance, and the TPCM functional component and the lightweight TPCM management component are separately deployed, improving security of the TPCM functional component.

With reference to the first aspect, in some implementations of the first aspect, the lightweight TPCM management component further includes a first communication module, and the first communication module is used for communication between the TSB and the compute part, so that the lightweight TPCM management component manages the TSB.

With reference to the first aspect, in some implementations of the first aspect, the lightweight TPCM management component further includes a second communication module, and the second communication module is used for communication between the TSB and the TPCM functional component, so that the lightweight TPCM management component manages the TPCM functional component.

With reference to the first aspect, in some implementations of the first aspect, the TSB is configured to construct an independent TEE instance.

In the foregoing technical solution, the TSB is constructed as an independent TEE instance, may be an FW program, and is managed by the TPCM management component without depending on a management function of the TEE OS, so that the TSB is decoupled from the TEE OS, and the entire solution of the trusted compute platform is further decoupled from the TEE OS.

With reference to the first aspect, in some implementations of the first aspect, the trusted compute platform is a trusted compute platform based on an Arm Trustzone S-EL2 architecture, the lightweight TPCM management component is constructed based on a secure partition manager SPM, and the TEE instance is an independent secure partition SP.

With reference to the first aspect, in some implementations of the first aspect, the trusted compute platform is a trusted compute platform based on a secure virtualization architecture of an Intel TDX architecture, the lightweight TPCM management component is constructed based on a TDX-module, and the TEE instance is an independent trusted domain TD.

With reference to the first aspect, in some implementations of the first aspect, the lightweight TPCM management component is specifically configured to perform, on the TSB and the TPCM functional component, any one or more of the following life cycle management: starting, interrupting, resuming, stopping, and destroying.

In the foregoing technical solution, the lightweight TPCM management component performs coarse-grained life cycle management on the TSB and the TPCM functional component, so that the implementation is simple.

According to a second aspect, a method for executing a security protection task by a trusted compute platform is provided. The trusted compute platform includes a compute part and a protection part, the protection part includes a trusted software base TSB and a trusted platform control module TPCM, the TPCM includes a TPCM functional component and a lightweight TPCM management component, and the method includes: The lightweight TPCM management component receives protection request information sent by the compute part, where the lightweight TPCM management component is configured to perform life cycle management on the TPCM functional component and the trusted software base TSB; the lightweight TPCM management component sends the protection request information to the TSB; the TSB invokes the TPCM functional component to execute the protection task, where the TPCM functional component is configured to perform security protection on the compute part; and the TSB sends an execution result of the protection task to the compute part through the lightweight TPCM management component.

With reference to the second aspect, in some implementations of the second aspect, the TPCM functional component is an independent TEE instance.

With reference to the second aspect, in some implementations of the second aspect, the TPCM functional component is a module in the lightweight TPCM management component, and the lightweight TPCM management component includes the TPCM functional component.

With reference to the second aspect, in some implementations of the second aspect, the lightweight TPCM management component further includes a first communication module, and the first communication module is used for communication between the TSB and the compute part, so that the lightweight TPCM management component manages the TSB, and the lightweight TPCM management component sends the protection request information to the TSB through the first communication module.

With reference to the second aspect, in some implementations of the second aspect, the lightweight TPCM management component further includes a second communication module, and the second communication module is used for communication between the TSB and the TPCM functional component, so that the lightweight TPCM management component manages the TPCM functional component, and the TSB invokes, through the second communication module, the TPCM functional component to execute the protection task.

With reference to the second aspect, in some implementations of the second aspect, the method further includes: The TSB sends, through the lightweight TPCM management component, a trusted control request to a TSB agent in the compute part, to enable the TSB agent to perform trusted control on the compute part based on the trusted control request.

With reference to the second aspect, in some implementations of the second aspect, the TSB is configured to construct an independent TEE instance.

With reference to the second aspect, in some implementations of the second aspect, the trusted compute platform is a trusted compute platform based on an Arm Trustzone S-EL2 architecture, the lightweight TPCM management component is constructed based on a secure partition manager SPM, and the TEE instance is an independent secure partition SP.

With reference to the second aspect, in some implementations of the second aspect, the trusted compute platform is a trusted compute platform based on an Intel TDX architecture, the lightweight TPCM management component is constructed based on a TDX-module, and the TEE instance is an independent trusted domain TD.

With reference to the second aspect, in some implementations of the second aspect, the lightweight TPCM management component is specifically configured to perform, on the TSB and the TPCM functional component, any one or more of the following life cycle management: starting, interrupting, resuming, stopping, and destroying.

According to a third aspect, a compute device cluster is provided, including at least one compute device, where each compute device includes a processor and a memory. The processor of the at least one compute device is configured to execute instructions stored in the memory of the at least one compute device, so that the compute device cluster performs the method according to any one of the second aspect or the possible implementations of the second aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a fourth aspect, a computer program product including instructions is provided. When the instructions are run by a compute device cluster, the compute device cluster is enabled to perform the method according to any one of the second aspect or the implementations of the second aspect.

According to a fifth aspect, a computer-readable storage medium is provided, and includes computer program instructions. When the computer program instructions are executed by a compute device cluster, the compute device cluster is enabled to perform the method according to any one of the second aspect or the implementations of the second aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a nonvolatile storage medium.

### BRIEF DESCRIPTION OF DRAWINGS

FIG. 1 is a block diagram of a system architecture of a TEE;
FIG. 2 is a diagram of a system architecture of a trusted compute platform;
FIG. 3 shows a system architecture of a TEE-based trusted compute platform according to an embodiment of this application;
FIG. 4 is a diagram of storing a TSB 311, a TPCM functional component 312, and a lightweight TPCM management component 313 in a form of software according to an embodiment of this application;
FIG. 5 shows another system architecture of a TEE-based trusted compute platform according to an embodiment of this application;
FIG. 6 shows another system architecture of a TEE-based trusted compute platform according to an embodiment of this application;
FIG. 7 is a schematic flowchart of a method for executing a protection task by a protection part according to an embodiment of this application;
FIG. 8 is a block diagram of a cloud scenario to which an embodiment of this application is applicable;
FIG. 9 is a diagram of an architecture of a compute device 1500 according to an embodiment of this application;
FIG. 10 is a diagram of an architecture of a compute device cluster according to an embodiment of this application; and
FIG. 11 is a diagram of a connection between a compute device 1500A and a compute device 1500B through a network according to an embodiment of this application.

### DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "for example" and "such as" are used to represent giving an example, an illustration, or description. Any embodiment or design solution described as an "example" in this application should not be explained as being more preferred or having more advantages than another embodiment or design solution. Exactly, "for example" is used to present a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

A service scenario described in embodiments of this application is intended to describe the technical solutions in embodiments of this application more clearly, and does not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "an embodiment", "some embodiments", or the like described in the specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "comprise", "have", and their variants all mean "include but are not limited to", unless otherwise specifically emphasized.

In this application, "at least one" refers to one or more, and "a plurality of" refers to two or more. The term "and/or" describes an association relationship for describing associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one item (pieces) of a, b, or c may indicate: a, b, c, a and b, a and c, b and c, or a, b, and c, where a, b, and c may be singular or plural.

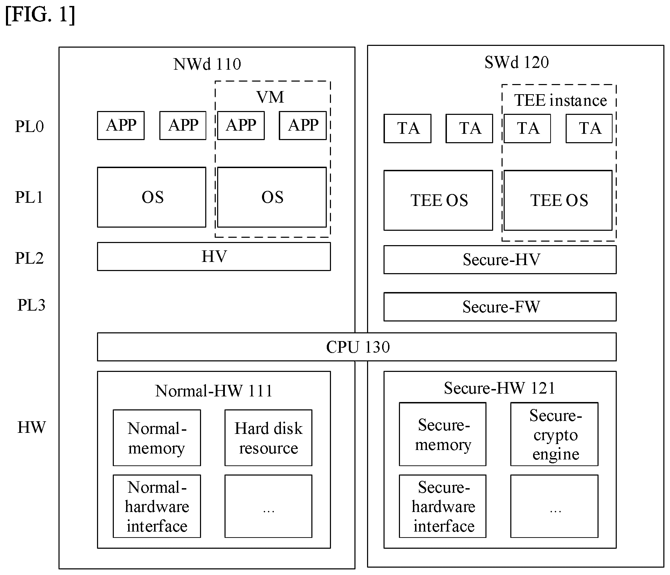

A trusted execution environment (trusted execution environment, TEE) is one of mainstream security architectures of modern processors. FIG. 1 is a block diagram of a system architecture of a TEE. As shown in FIG. 1, the system architecture of the TEE includes a non-secure world (non-secure world, NWd) 110 and a secure world (secure world, SWd) 120. In other words, in the TEE system, one or more secure computing environments (namely, the SWd 120) isolated from a normal computing environment (namely, the NWd 110) are constructed, and various security functions are deployed in the SWd 120, to provide a security service for the NWd 110.

It should be understood that the TEE is an independent and isolated secure running environment. Because the TEE provides an isolated environment for storing sensitive information of a user (for example, code and data of the user), the TEE provides more secure space for execution of the code and the data, and ensures confidentiality and security of the sensitive information of the user (for example, the code and the data of the user).

In the system architecture of the TEE, the NWd 110 and the SWd 120 share a processor CPU 130 in a time division manner, but hardware (hardware, HW) resources of the NWd 110 and the SWd 120 are isolated from each other. For example, normal-HW 111 in the NWd 110 and secure-HW 121 in the SWd 120 are isolated from each other. The normal-HW 111 may include but is not limited to a normal-memory, a hard disk resource, a normal-hardware interface, and the like. The secure-HW 121 is generally considered as inherently secure, and the secure-HW 121 may include but is not limited to a secure-memory, a secure-crypto engine, a secure-hardware interface, and the like.

In addition, the system architecture of the TEE still maintains a privilege level division form of the processor. As shown in FIG. 1, main privilege levels include but are not limited to PL0, PL1, PL2, PL3, and the like. For example, the PL0 is generally in a user mode, the PL1 is generally in a supervisor mode, the PL2 is generally in a hypervisor mode, and the PL3 is generally in a monitor mode.

The following separately uses the NWd 110 and the SWd 120 as examples to describe in detail programs/components mainly deployed at each privilege level.

In an example, in the NWd 110, the PL0 generally runs one or more applications (Application, APP), and is responsible for executing a compute service function. The PL1 generally runs an operating system (operating system, OS), and is responsible for managing one or more APPs, providing a system service for one or more APPs, and the like. When the NWd 110 supports virtualization, the PL2 generally runs a hypervisor (hypervisor, HV), and supports deployment and management of a plurality of virtual machines (virtual machine, VM). An OS and one or more APPs may be deployed in each VM.

In another example, in the SWd 120, the PL0 generally runs one or more trusted applications (trusted application, TA), and is responsible for executing a security service function. The PL1 generally runs a TEE operating system (TEE OS), is responsible for managing one or more TAs, providing a system service for one or more TAs, and the like. When the SWd 120 supports secure virtualization, the PL2 generally runs a secure-HV, and supports deployment and management of one or more TEE instances. A TEE OS and one or more TAs may be deployed in each TEE instance. The PL3 generally runs secure-firmware (firmware, FW), is considered to be inherently secure, and is responsible for secure loading and startup of a system, providing an underlying firmware service, and the like.

It should be understood that an application running in the TEE is referred to as a trusted application (trusted application, TA). The TEE divides an independent trusted zone in a processor (for example, a central processing unit (central processing unit, CPU)) and a memory, and isolates different TAs in the processor and the memory, to prevent different TAs from reading and accessing data of each other. The TAs running in the TEE can access all functions of the main processor and the memory of the device, and hardware isolation protects these components from being affected by user-installed applications running in the main operating system.

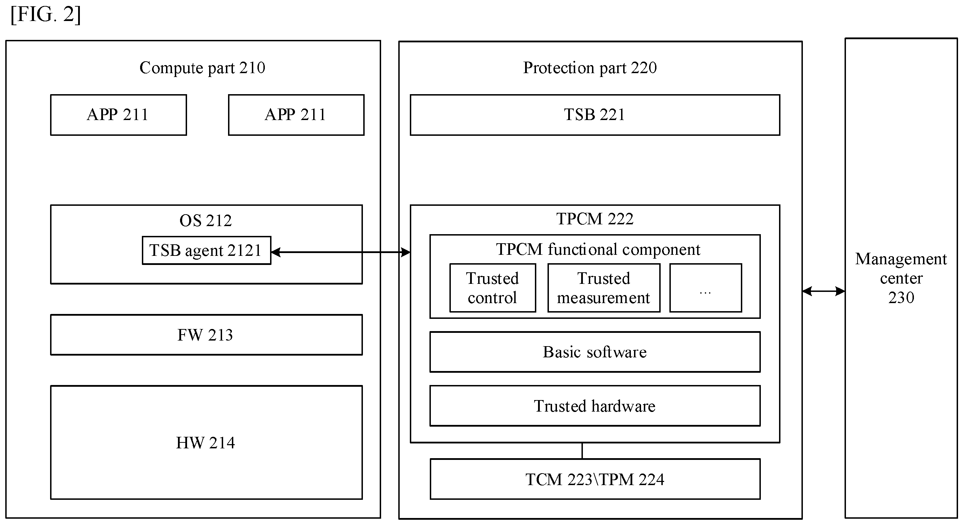

FIG. 2 is a diagram of a system architecture of a trusted compute platform. As shown in FIG. 2, the trusted compute platform includes a compute part 210 and a protection part 220, and therefore the trusted compute platform has two parallel features: computation and protection.

The compute part 210 executes a service-related compute task, and the protection part 220 performs active measurement and control on the compute part 110. Optionally, the trusted compute platform further includes a remote management center 230. The protection part 220 may further communicate with the remote management center 230 through an external interface, including obtaining a trusted strategy, reporting an audit result, and the like.

For example, the compute part 210 includes one or more APPs 211, an OS 212, FW 213, and HW 214. The OS 212 includes a trusted software base (trusted software base, TSB) agent 2121. The TSB agent 2121 communicates with the protection part 220 to transfer information, including initiating a measurement or control request to a TSB 221 in the protection part 220, so that the TSB 221 in the protection part 220 performs active measurement and control on the compute part 110.

It should be understood that the TSB is a set of software elements that provide support for trustworthiness of the trusted compute platform.

For example, the protection part 220 includes the TSB 221, a trusted platform control module (trusted platform control module, TPCM) 222, a trusted cryptography module (trusted cryptography module, TCM) 223, and a trusted platform module (trusted platform module, TPM) 224. The following describes in detail functions of the components included in the protection part 220.

The TSB 221 is configured to: receive a measurement request, a control request, and the like from the compute part 110, and invoke service function interfaces such as measurement, control, determining, and support that are provided by the TPCM 222, to perform active measurement and control on the compute part 110.

The TCM 223\TPM 224 is a hardware module on the trusted compute platform, provides a cryptographic operation function for the trusted compute platform, and has protected storage space.

The TPCM 222 is a core protection part integrated on the trusted compute platform, is a trust anchor of the trusted compute platform, that is, a root of trust, and provides functions such as trusted measurement, trusted control, trusted verification, encryption protection, trusted reporting, and crypto invocation. The TPCM 222 provides various trusted function interfaces for the TSB 221 upward, and may invoke a hardware password capability of the TCM 223\TPM 224 downward, to complete protection for the compute part. For example, the TPCM 222 includes a hardware part and a software part. The software part includes a TPCM functional component and basic software, and the hardware part includes trusted hardware. For example, the TPCM functional component may include but is not limited to trusted control, trusted measurement, a determining service, a support mechanism service, a strategy library management component, and an interface provided for the TSB 221. For another example, the basic software may include but is not limited to a software component responsible for resource scheduling and task management of the TPCM 222, and providing I/O interface drive and control. For another example, the trusted hardware may include but is not limited to a CPU required for running the TPCM 222, a trusted static random access memory (static random access memory, SRAM), a trusted dynamic random access memory (dynamic random access memory, DRAM), a trusted crypto engine, a trusted network interface, a trusted peripheral component interconnect express (peripheral component interconnect express, PCIE), and the like.

In a related solution of a TEE-based trusted compute platform, a TPCM includes a TPCM OS, and the TPCM OS includes a TPCM functional component and a TEE OS. The TEE OS can schedule and manage the TPCM functional component and the TSB, and can further schedule and manage some driver modules, libraries, and the like. As a result, a code scale of the TEE OS is excessively large (the code scale is about 200 KLoC). The TPCM OS is implemented based on the TEE OS, and the software part of the TPCM includes the TEE OS code. As a result, the TPCM has a large attack surface and low security, security audit and security authentication on the TPCM barely succeed, and the TPCM cannot be used as a root of trust.

In view of this, an embodiment of this application provides a TEE-based trusted compute platform. A lightweight TPCM management component is constructed in a TPCM on the trusted compute platform, and the lightweight TPCM management component is configured to be responsible for managing a TSB and a TPCM functional component in the TPCM. Because the TPCM management component included in basic software of the TPCM is lightweight, a code scale of the lightweight TPCM management component is small, and a code scale of the TPCM is small. Therefore, an attack surface of the TPCM can be reduced and security of the TPCM can be improved in design.

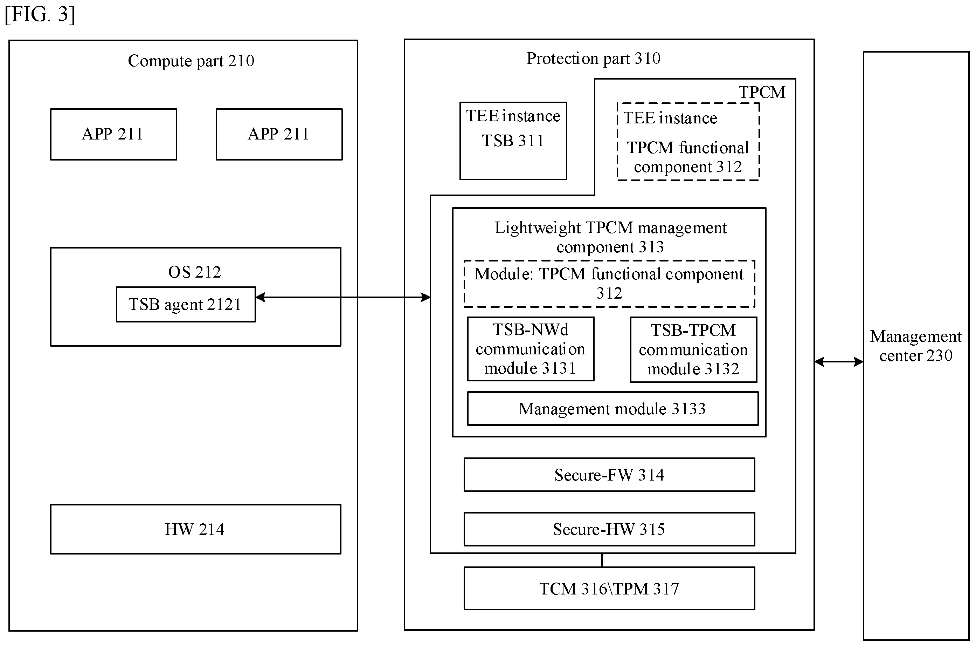

FIG. 3 shows a system architecture of a TEE-based trusted compute platform according to an embodiment of this application. As shown in FIG. 3, the system architecture of the trusted compute platform may include a compute part 210 and a protection part 310. The system architecture of the TEE shown in FIG. 1 is used as an example. The compute part 210 may be deployed in a NWd 110, and the protection part 310 is deployed in a SWd 120.

For example, the compute part 210 includes one or more APPs 211, an OS 212, FW 213, and HW 214. For specific functions of the modules included in the compute part 210, refer to the descriptions in FIG. 2. Details are not described herein again.

For example, the protection part 310 includes a TSB 311, a TPCM functional component 312, a lightweight TPCM management component 313, secure-FW 314, secure-HW 315, and a TCM 316\TPM 317. The TPCM functional component 312, the lightweight TPCM management component 313, the secure-FW 314, and the secure-HW 315 may all belong to the TPCM.

The following separately describes in detail functions of the components included in the protection part 310.

The TSB 311 is managed by the lightweight TPCM management component 313.

Optionally, in some embodiments, the TSB 311 may be constructed as an independent TEE instance. For example, the independent TEE instance may be an FW program.

It should be understood that a privilege level of the TSB 311 may be the SWd PL0 or the SWd PL1.

The TPCM functional component 312 is managed by the lightweight TPCM management component 313. The TPCM functional component 312 may be implemented in a plurality of manners. This is not specifically limited in this embodiment of this application. In an example, the TPCM functional component 312 may be constructed as a TEE instance, for example, may be an FW program. For example, in this implementation, a privilege level of the TPCM functional component 312 may be the SWd PL0 or the SWd PL1. In another example, the TPCM functional component 312 may be constructed as a module in the lightweight TPCM management component 313, and the TPCM functional component 312 is used as a part of the lightweight TPCM management component 313. For example, in this implementation, the privilege level of the TPCM functional component 312 is the same as a privilege level of the lightweight TPCM management component 313, and the TPCM functional component 312 is located at a secure-FW layer of the SWd PL2 or the SWd PL3.

It should be noted that, for a specific function provided by the TPCM functional component 312, refer to the description in FIG. 2. Details are not described herein again.

The lightweight TPCM management component 313 is responsible for managing the TSB 311 and the TPCM functional component 312. For example, the lightweight TPCM management component 313 may be constructed at the secure-FW layer of the SWd PL2 or the SWd PL3. The lightweight TPCM management component 313 is configured to perform life cycle management on the TSB 311 and the TPCM functional component 312, where the life cycle management may include but is not limited to performing, on the TSB 311 and the TPCM functional component 312, the following management: starting, interrupting, resuming, stopping, and destroying.

Optionally, in some embodiments, the lightweight TPCM management component may also be referred to as a lightweight TPCM manager.

In some embodiments, the lightweight TPCM management component 313 may include a TSB-NWd communication module 3131, a TSB-TPCM communication module 3132, and a management module 3133. Optionally, if the TPCM functional component 312 is constructed as a module in the lightweight TPCM management component 313, the lightweight TPCM management component 313 further includes the TPCM functional component 312. The TSB-NWd communication module 3131 is configured to perform communication interaction between the TSB 311 and the compute part 210 in the NWd 110, so that the lightweight TPCM management component 313 manages the TSB 311. The TSB-TPCM communication module 3132 is configured to perform communication interaction between the TSB 311 and the TPCM functional component 312, so that the lightweight TPCM management component 313 manages the TPCM functional component 312. The management module 3133 is configured to be responsible for managing the TSB 311 and the TPCM functional component 312, and mainly implements software functions such as starting, interrupting, resuming, stopping, and destroying of the TSB 311 and the TPCM functional component 312.

The system architecture of the TEE-based trusted compute platform provided in this embodiment of this application includes the TSB and the TPCM. The lightweight TPCM management component is used as the basic software of the TPCM, and is responsible for managing the TSB on the trusted compute platform and the TPCM functional component in the TPCM. Because the TPCM management component included in the basic software of the TPCM is lightweight, the code scale of the TPCM management component is small (for example, on a trusted compute platform based on a secure virtualization architecture of Arm Trustzone S-EL2, the lightweight management component is constructed based on a lightweight SPM, and a code scale of an open-source SPM is about 20 KLoC), and the code scale of the TPCM is small. Therefore, the attack surface of the TPCM can be reduced and the security of the TPCM can be improved in design, security audit and security authentication on the TPCM can easily succeed, and the TPCM can be used as the root of trust.

In other words, the TPCM on the trusted compute platform provided in this embodiment of this application does not include the TEE OS, but includes the lightweight TPCM management component. Because the lightweight TPCM management component is responsible for managing the TSB on the trusted compute platform and the TPCM functional component in the TPCM, and does not include another driver module or another function, the code scale of the lightweight TPCM management component is small, and the code scale of the TPCM is small. Therefore, the attack surface of the TPCM can be reduced and the security of the TPCM can be improved, security audit and security authentication on the TPCM can easily succeed, and the TPCM can be used as the root of trust.

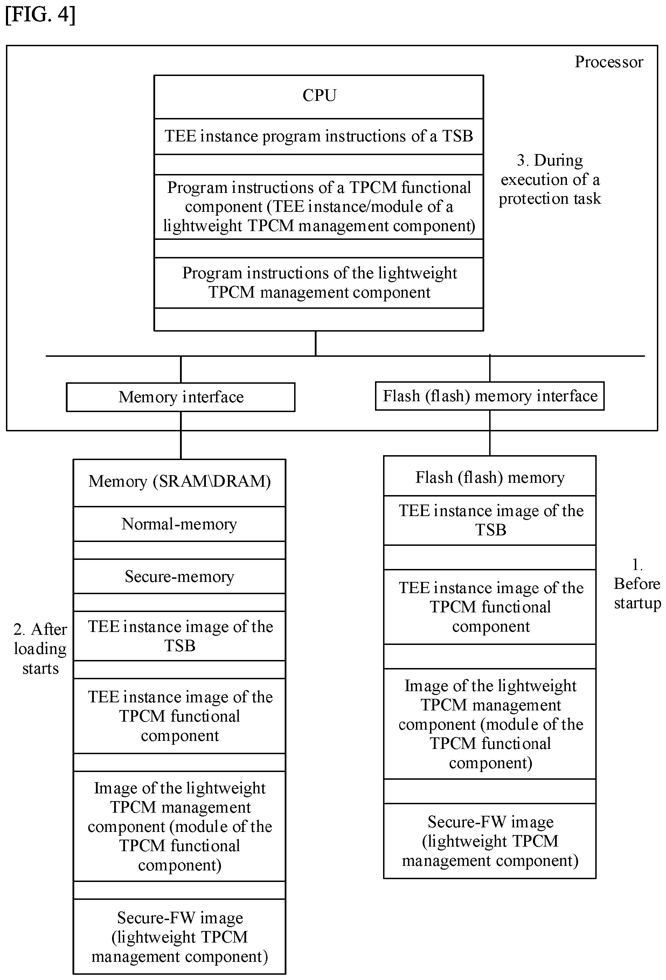

In this embodiment of this application, the TSB 311, the TPCM functional component 312, and the lightweight TPCM management component 313 are stored and invoked in a form of software. For example, as shown in FIG. 4, before the processor is started, the three pieces of software are stored in a nonvolatile memory, for example, a flash memory. The TSB 311 is stored as a TEE instance image. The TPCM functional component 312 is stored as a TEE instance image or is used as a module in the lightweight TPCM management component 313, and is a part of the lightweight TPCM management component 313. The lightweight TPCM management component 313 is stored as an image or is stored as a part of a secure-FW image. After the processor starts program loading, the processor loads the three pieces of software to a memory (for example, an SRAM or a DRAM) of the processor for storage. For example, the three pieces of software may be loaded to a secure-memory of the processor, and stored in a form of a program. When a running state of the processor is executing a protection task, instructions of the three pieces of software are executed in a unit (for example, a CPU) of the processor.

Optionally, in some embodiments, the TSB may be further constructed as an independent TEE instance. The TSB is constructed as an independent TEE instance, may be an FW program, and is managed by the TPCM management component without depending on a management function of the TEE OS, so that the TSB is decoupled from the TEE OS, and the entire solution of the trusted compute platform is further decoupled from the TEE OS. Flexibility of the trusted compute platform is improved.

A secure virtualization architecture supported by the TEE system is not specifically limited in this embodiment of this application. In an example, the secure virtualization architecture is a secure virtualization architecture based on Arm Trustzone S-EL2. In another example, the secure virtualization architecture is a secure virtualization architecture based on Intel TDX.

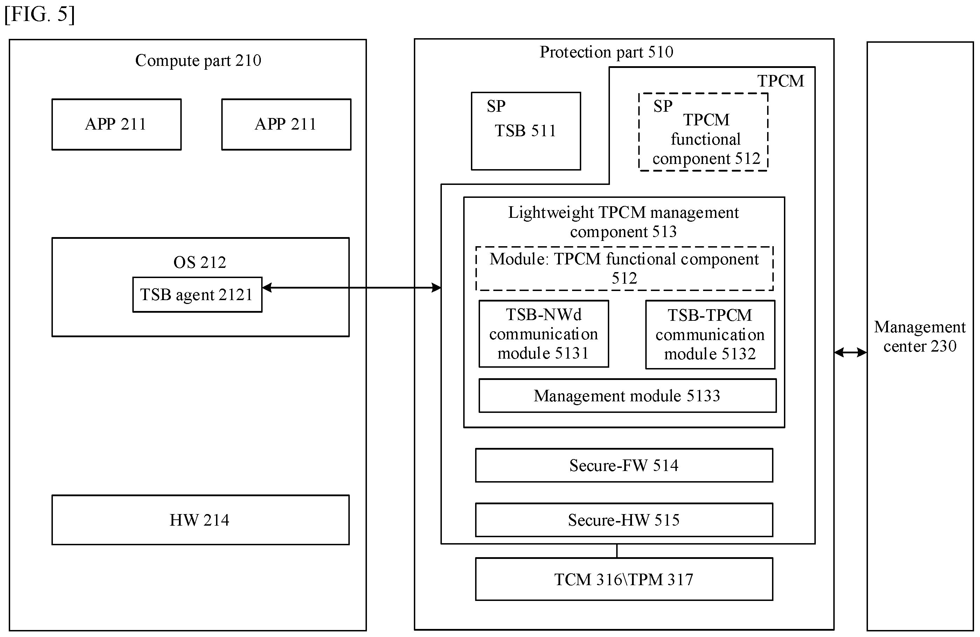

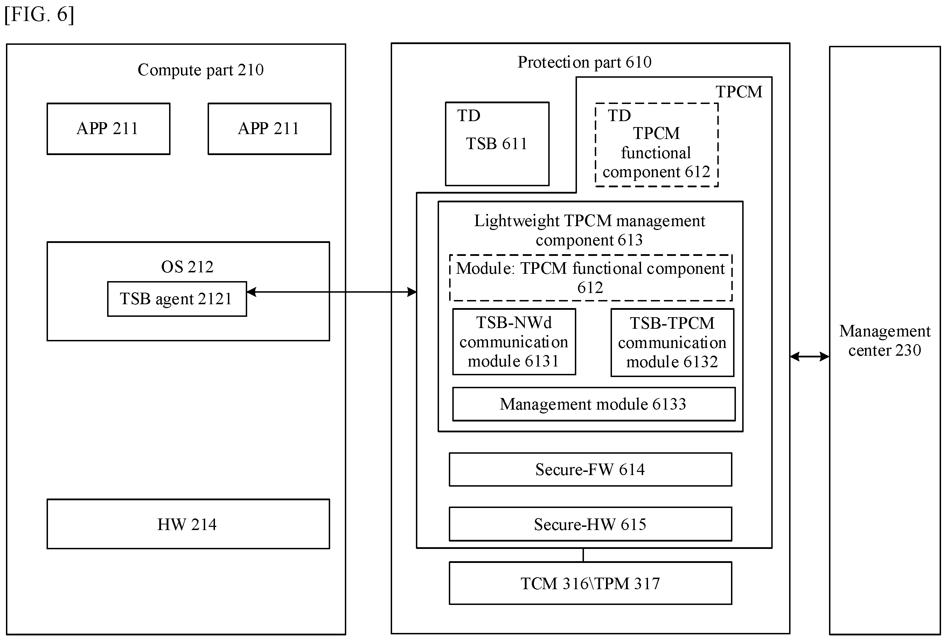

The following separately uses the two secure virtualization architectures supported by the TEE system as examples to describe in detail two specific implementations of the TEE-based trusted compute platform with reference to FIG. 5 and FIG. 6. It should be understood that the examples in FIG. 5 and FIG. 6 are merely intended to help a person skilled in the art understand embodiments of this application, but are not intended to limit embodiments of this application to specific values or specific scenarios in the examples in FIG. 5 and FIG. 6. It is clear that a person skilled in the art can make various equivalent modifications or changes based on the following example provided in FIG. 5 and FIG. 6, and such modifications and changes also fall within the scope of embodiments of this application.

FIG. 5 shows another system architecture of a TEE-based trusted compute platform according to an embodiment of this application. As shown in FIG. 5, in a secure virtualization architecture of Arm Trustzone S-EL2, NWd privilege levels are EL0, EL1, and EL2, and SWd privilege levels are S-ELO, S-EL1, S-EL2 and S-EL3. A secure partition manager (secure partition manager, SPM) may be deployed in the S-EL2, and is equivalent to a secure-HV. The SPM supports construction of a plurality of TEE instances that are isolated from each other, and the plurality of TEE instances are referred to as secure partitions (secure partition, SP). A privilege level of an SP may be S-ELO or S-EL1, and secure-FW runs at S-EL3.

For example, as shown in FIG. 5, in a protection part 510, a TSB 511 is configured to construct an independent SP (which may be understood as an independent TEE instance, and referred to as a TSB SP), may be an FW program, and is managed by a lightweight TPCM management component 513. A privilege level may be S-ELO or S-EL1. A TPCM functional component 512 is constructed as an independent SP (referred to as a TPCM SP), may be an FW program, and is managed by the lightweight TPCM management component 513. A privilege level may be S-ELO or S-EL1. At the S-EL2 privilege level, the lightweight TPCM management component 513 is constructed based on a lightweight SPM, and is responsible for managing the TSB 511 (TSB SP) and the TPCM functional component 512 (TPCM SP). The lightweight TPCM management component 513, the TPCM functional component 512 (TPCM SP), and secure FW 514 form a software part of a TPCM.

It should be noted that functions of the lightweight TPCM management component 513 and the lightweight TPCM management component 313 are the same. For details, refer to the descriptions of the lightweight TPCM management component 313 in FIG. 3. Details are not described herein again.

In the foregoing trusted compute platform based on the secure virtualization architecture of Arm Trustzone S-EL2, the lightweight TPCM management component constructed based on the lightweight SPM is responsible for managing the TSB SP and the TPCM SP. The software part of the TPCM does not include the TEE OS (a code scale is about 200 KLoC), but includes the lightweight TPCM management component constructed based on the lightweight SPM (a code scale of an open-source SPM is about 20 KLoC), so that a software scale of the TPCM is greatly reduced. In addition, the TSB is constructed as an independent SP, may be an FW program, and is managed by the lightweight TPCM management component without depending on a management function of the TEE OS, so that the TSB SP is decoupled from the TEE OS, and the entire solution of the trusted compute platform is further decoupled from the TEE OS.

FIG. 6 shows another system architecture of a TEE-based trusted compute platform according to an embodiment of this application. As shown in FIG. 6, in a secure virtualization architecture of Intel TDX, the Intel TDX architecture supports running of a plurality of normal VMs. The VMs are managed by a virtual machine manager (virtual machine manager, VMM) in a hypervisor mode, and the VMM may be equivalent to an HV. Intel TDX also supports a plurality of secure trusted domains (trust domain, TD), and the TD may be equivalent to a TEE instance. The TD is managed by a TDX-module, and the TDX-module may be equivalent to a secure-HV. A TD OS and TD APPs may run in the TD. The TD OS is equivalent to a TEE OS, and the TD APPs are equivalent to TAs. The TDX-module runs in a newly introduced privileged mode (secure-arbitration mode (Secure-Arbitration Mode, SEAM Mode)).

For example, as shown in FIG. 6, in a protection part 610, a TSB 611 is configured to construct an independent TD (which may be understood as an independent TEE instance, and referred to as a TSB TD), may be an FW program, and is managed by a lightweight TPCM management component 613. A TPCM functional component 612 is constructed as an independent TD (referred to as a TPCM TD), may be an FW program, and is managed by the lightweight TPCM management component 613. The lightweight TPCM management component 613 constructed based on the TDX-module is responsible for managing the TSB 611 (TSB TD) and the TPCM functional component 612 (TPCM TD). The lightweight TPCM management component 613, the TPCM functional component 612 (TPCM TD), and secure FW 614 form a software part of a TPCM.

In the foregoing trusted compute platform based on the secure virtualization architecture of Intel TDX, the lightweight TPCM management component constructed based on the lightweight TDX-module is responsible for managing the TSB TD and the TPCM TD. The software part of the TPCM does not include the TEE OS (a code scale is about 200 KLoC), but includes the lightweight TPCM management component constructed based on the lightweight TDX-module, so that a software scale of the TPCM is greatly reduced. In addition, the TSB is constructed as an independent TD, may be an FW program, and is managed by the lightweight TPCM management component without depending on a management function of the TEE OS, so that the TSB TD is decoupled from the TEE OS, and the entire solution of the trusted compute platform is further decoupled from the TEE OS.

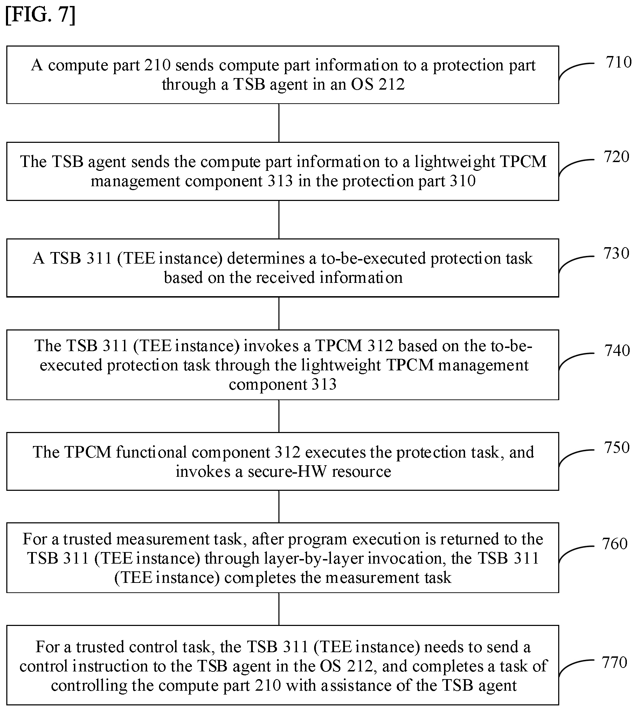

The following uses the system architecture of the TEE-based trusted compute platform in FIG. 3 as an example to describe in detail, with reference to FIG. 7, a method for executing a protection task by a processor according to an embodiment of this application. It should be understood that an example in FIG. 7 is merely intended to help a person skilled in the art understand embodiments of this application, but are not intended to limit embodiments of this application to a specific value or a specific scenario in the example in FIG. 7. It is clear that a person skilled in the art can make various equivalent modifications or changes based on the following example provided in FIG. 7, and such modifications and changes also fall within the scope of embodiments of this application.

FIG. 7 is a schematic flowchart of a method for executing a protection task by a protection part according to an embodiment of this application. As shown in FIG. 7, the method may include steps 710 to 770. The following separately describes steps 710 to 770 in detail.

It should be understood that, in an initialization phase, the management module 3133 in the lightweight TPCM management component 313 is responsible for initializing the TSB 311 (TEE instance) and the TPCM functional component 312.

Step 710: The compute part 210 sends compute part information to the protection part through the TSB agent in the OS 212 in the compute part 210.

For example, the compute part information may include but is not limited to memory address information, behavior information that is of the compute part and that is intercepted by the TSB agent, and the like.

Step 720: The TSB agent sends the compute part information to the lightweight TPCM management component 313 in the protection part 310.

For example, the TSB agent in the compute part 210 may send the compute part information to the lightweight TPCM management component 313 in the protection part 310. Specifically, the TSB-NWd communication module 3131 in the lightweight TPCM management component 313 receives the information, and forwards the information to the TSB 311 (TEE instance) in the protection part through the TSB-NWd communication module 3131.

Step 730: The TSB 311 (TEE instance) determines a to-be-executed protection task based on the received information.

For example, the TSB 311 (TEE instance) may determine the to-be-executed protection task based on the received information. The protection task may include but is not limited to a trusted measurement task, a trusted control task, and the like.

Step 740: The TSB 311 (TEE instance) invokes the TPCM functional component 312 based on the to-be-executed protection task through the lightweight TPCM management component 313.

For example, after determining the to-be-executed protection task, the TSB 311 (TEE instance) may invoke the TPCM functional component 312 through the lightweight TPCM management component 313, so that the TPCM functional component 312 executes the protection task. For example, the TSB 311 (TEE instance) may invoke the TPCM functional component 312 through the TSB-TPCM communication module 3132 in the lightweight TPCM management component 313.

Step 750: The TPCM functional component 312 executes the protection task, and invokes a secure-HW resource.

For example, the TPCM functional component 312 may invoke the secure-HW resource to execute the protection task.

In this embodiment of this application, the TPCM functional component 312 may further invoke the TCM 316\TPM 317 by invoking a secure-hardware interface (for example, PCIE) in the secure HW.

Step 760: For the trusted measurement task, after program execution is returned to the TSB 311 (TEE instance) through layer-by-layer invocation, the TSB 311 (TEE instance) completes the measurement task.

Step 770: For the trusted control task, the TSB 311 (TEE instance) needs to send a control instruction to the TSB agent in the OS 212, and completes a task of controlling the compute part 210 with assistance of the TSB agent.

For example, the TSB 311 (TEE instance) may send the control instruction to the TSB agent in the compute part 210 through the TSB-NWd communication module 3131 in the lightweight TPCM management component 313.

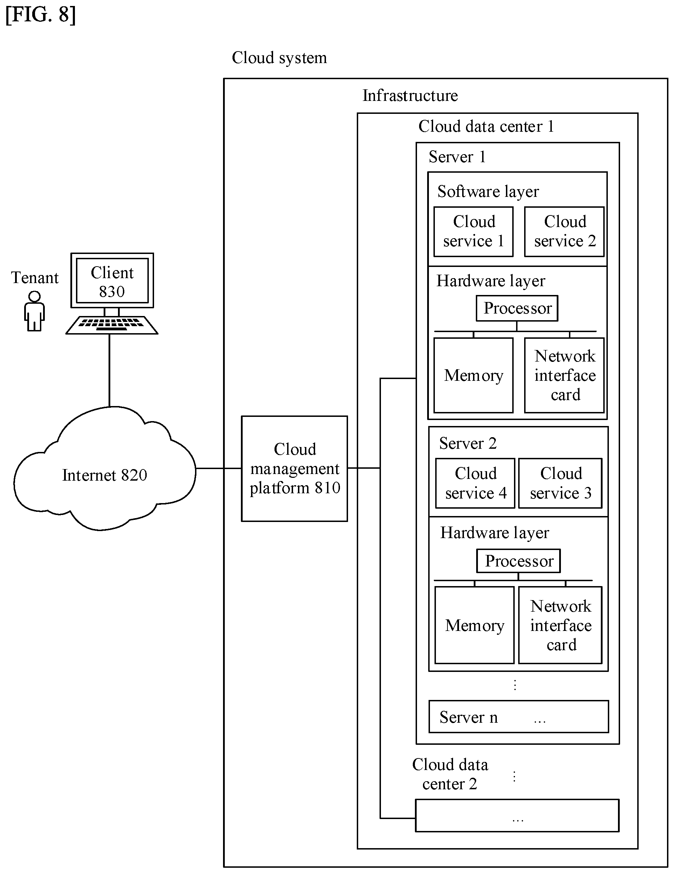

In a possible implementation, the foregoing method provided in this embodiment of this application may be applied to a cloud service scenario, and a cloud management platform in the cloud service scenario performs the method. For ease of description, the cloud service scenario is first described below in detail with reference to FIG. 8.

FIG. 8 is a block diagram of a cloud scenario to which an embodiment of this application is applicable. As shown in FIG. 8, the cloud scenario may include a cloud management platform 810, an internet 820, and a client 830.

As shown in FIG. 8, the cloud management platform 810 is configured to manage an infrastructure that provides a plurality of cloud services. The infrastructure includes a plurality of cloud data centers. Each cloud data center includes a plurality of servers. Each server includes a cloud service resource, to provide a corresponding cloud service for a tenant.

The cloud management platform 810 may be located in the cloud data center, and may provide an access interface (for example, an interface or an application programming interface (application programming interface, API)). The tenant may operate the client 830 to remotely access the access interface, to register a cloud account and a password on the cloud management platform 810 and log in to the cloud management platform 810. After the cloud management platform 810 successfully authenticates the cloud account and the password, the tenant may further pay on the cloud management platform 810 to select and purchase a virtual machine with a specific specification (a processor, a memory, or a disk). After the payment for purchase succeeds, the cloud management platform 810 provides a remote login account and password of the purchased virtual machine, and the client 830 may remotely log in to the virtual machine, and install and run an application of the tenant in the virtual machine. Therefore, the tenant may create, manage, log in to, and operate the virtual machine in the cloud data center through the cloud management platform 810. The virtual machine may also be referred to as a cloud server (elastic compute service, ECS) or an elastic instance (varies with different cloud service providers).

It should be understood that the tenant of the cloud service may be an individual, an enterprise, a school, a hospital, an administrative agency, or the like.

Functions of the cloud management platform 810 include but are not limited to a user console, a computing management service, a network management service, a storage management service, an authentication service, and an image management service. The user console provides an interface or an API to interact with the tenant. The computing management service is used to manage servers on which a virtual machine and a container are run, and a bare metal server. The network management service is used to manage a network service (for example, a gateway or a firewall). The storage management service is used to manage a storage service (for example, a data bucket service). The authentication service is used to manage a tenant account and password. The image management service is used to manage a virtual machine image. The tenant may use the client 830 to log in to the cloud management platform 810 through the internet 820 to manage a rented cloud service.

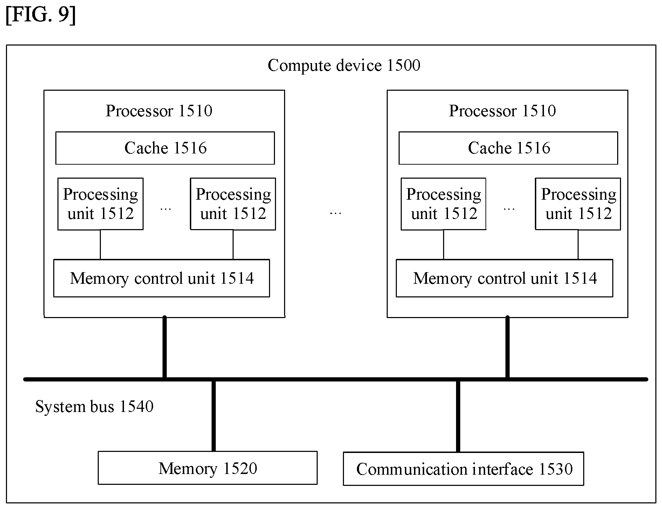

The following describes in detail a compute device provided in embodiments of this application with reference to FIG. 9. The compute device may also be referred to as a computer system. The compute device may include a hardware layer, an operating system layer running above the hardware layer, and an application layer running above the operating system layer. The hardware layer includes hardware, for example, a processing unit, a memory, and a memory control unit. Subsequently, functions and structures of the hardware are described in detail. The operating system is any one or more computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software. In addition, optionally, the computer system is a handheld device, for example, a smartphone, or a terminal device, for example, a personal computer. This is not particularly limited in this application.

FIG. 9 is a diagram of an architecture of a compute device 1500 according to an embodiment of this application. The compute device 1500 may be a server, a computer, or another device with a computing capability. The compute device 1500 shown in FIG. 9 includes at least one processor 1510 and a memory 1520.

It should be understood that quantities of processors and memories in the compute device 1500 are not limited in this application.

The processor 1510 executes instructions in the memory 1520, so that the compute device 1500 implements the method provided in this application. Alternatively, the processor 1510 executes instructions in the memory 1520, so that the compute device 1500 implements functions of the components provided in this application. For example, the instructions in the memory 1520 may be software programs of the TSB 311, the TPCM functional component 312, and the lightweight TPCM management component 313. For specific descriptions, refer to FIG. 4. Details are not described herein again.

Optionally, the compute device 1500 further includes a communication interface 1530. The communication interface 1530 uses a transceiver module, for example, but not limited to, a network interface card or a transceiver, to implement communication between the compute device 1500 and another device or a communication network.

Optionally, the compute device 1500 further includes a system bus 1540. The processor 1510, the memory 1520, and the communication interface 1530 are separately connected to the system bus 1540. The processor 1510 can access the memory 1520 through the system bus 1540. For example, the processor 1510 can read and write data or execute code in the memory 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified into an address bus, a data bus, a control bus, or the like. For ease of representation, only one thick line is used to represent the bus in FIG. 9, but this does not mean that there is only one bus or only one type of bus.

In a possible implementation, a function of the processor 1510 is mainly to interpret instructions (or code) of a computer program and process data in computer software. The instructions of the computer program and the data in the computer software can be stored in the memory 1520 or a cache 1516.

Optionally, the processor 1510 may be an integrated circuit chip and has a signal processing capability. As an example rather than a limitation, the processor 1510 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or a kernel, and is the most important component of the processor. The processing unit 1512 is made of monocrystalline silicon through a specific production process. All computation, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction level unit, and a bus interface.

In an implementation example, the memory control unit 1514 is configured to control data exchange between the memory 1520 and the processing unit 1512. Specifically, the memory control unit 1514 receives a memory access request from the processing unit 1512, and controls access to the memory based on the memory access request. As an example rather than a limitation, the memory control unit is a device, for example, a memory management unit (memory management unit, MMU).

In an implementation example, each memory control unit 1514 performs addressing for the memory 1520 through the system bus. In addition, an arbiter (not shown in FIG. 9) is configured in the system bus, and the arbiter is responsible for processing and coordinating contention-based access of a plurality of processing units 1512.

In an implementation example, the processing unit 1512 is in communication connection with the memory control unit 1514 through a connection line inside a chip, for example, an address line, to implement communication between the processing unit 1512 and the memory control unit 1514.

Optionally, each processor 1510 further includes a cache 1516, and the cache is a data exchange buffer (referred to as a cache). When the processing unit 1512 needs to read data, the processing unit 1512 first searches the cache for the needed data. If the data is found, the processing unit 1512 directly reads the data. If the data is not found, the processing unit 1512 searches the memory for the data. Because the cache runs much faster than the memory, a function of the cache is to help the processing unit 1512 run faster.

The memory 1520 can provide running space for a process in the compute device 1500. For example, the memory 1520 stores a computer program (specifically, program code) used to generate the process. After the computer program is run by the processor to generate the process, the processor allocates corresponding storage space to the process in the memory 1520. Further, the storage space further includes a text segment, an initial data segment, an uninitialized data segment, a stack segment, a heap segment, and the like. The memory 1520 stores, in the storage space corresponding to the process, data generated during running of the process, for example, intermediate data or process data.

Optionally, the memory is also referred to as an internal memory, and a function of the memory is to temporarily store operation data in the processor 1510 and data exchanged with an external memory, for example, a hard disk. Provided that the computer runs, the processor 1510 schedules, to the memory for an operation, data on which the operation needs to be performed, and the processing unit 1512 sends a result after the operation is completed.

As an example rather than a limitation, the memory 1520 is a volatile memory or a nonvolatile memory, or may include both a volatile memory and a nonvolatile memory. The non-volatile memory is a read-only memory (read-only memory, ROM), a programmable read-only memory (programmable ROM, PROM), an erasable programmable read-only memory (erasable PROM, EPROM), electrically erasable programmable read-only memory (electrically EPROM, EEPROM), or a flash memory. The volatile memory is a random access memory (random access memory, RAM) and serves as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory 1520 of the systems and methods described in this specification is intended to include, but is not limited to, these and any memory of another proper type.

It should be understood that a structure of the foregoing enumerated compute device 1500 is merely an example for description, and this application is not limited thereto. The compute device 1500 in this embodiment of this application includes various hardware in a computer system in a conventional technology. For example, the compute device 1500 further includes a memory other than the memory 1520, for example, a magnetic disk memory. A person skilled in the art should understand that the compute device 1500 may further include another component necessary for implementing normal running. In addition, a person skilled in the art should understand that, based on a specific requirement, the compute device 1500 may further include a hardware component implementing another additional function. Moreover, a person skilled in the art should understand that the compute device 1500 may include only a component required for implementing embodiments of this application, and does not need to include all the components shown in FIG. 9.

An embodiment of this application further provides a compute device cluster. The compute device cluster includes at least one compute device. The compute device may be a server. In some embodiments, the compute device may alternatively be a terminal device, for example, a desktop computer, a notebook computer, or a smartphone.

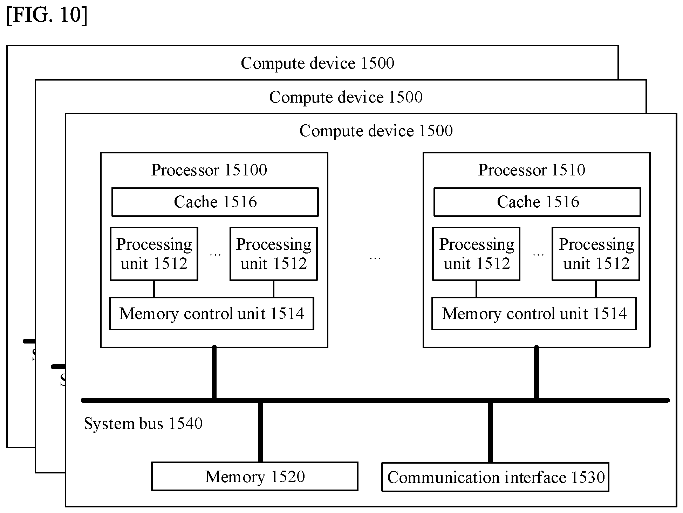

As shown in FIG. 10, the compute device cluster includes at least one compute device 1500. Memories 1520 of one or more compute devices 1500 in the compute device cluster may store same instructions used to perform the foregoing method.

In some possible implementations, the memories 1520 of the one or more compute devices 1500 in the compute device cluster may alternatively separately store some instructions used to perform the foregoing method. In other words, a combination of one or more compute devices 1500 may jointly execute instructions of the foregoing method.

It should be noted that memories 1520 of different compute devices 1500 in the compute device cluster may store different instructions respectively used to perform some functions of the foregoing apparatus. In other words, the instructions stored in the memories 1520 in different compute devices 1500 may implement functions of one or more modules in the foregoing apparatus.

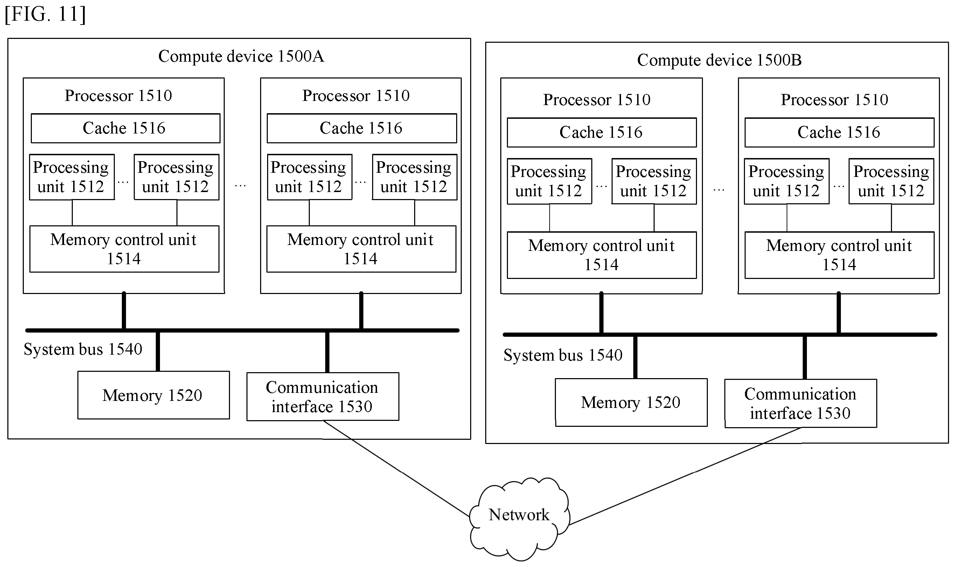

In some possible implementations, the one or more compute devices in the compute device cluster may be connected through a network. The network may be a wide area network, a local area network, or the like. FIG. 11 shows a possible implementation. As shown in FIG. 11, two compute devices 1500A and 1500B are connected through a network. Specifically, each compute device is connected to the network through a communication interface of the compute device.

It should be understood that functions of the compute device 1500A shown in FIG. 11 may alternatively be completed by a plurality of compute devices 1500. Similarly, functions of the compute device 1500B may alternatively be completed by a plurality of compute devices 1500.

An embodiment further provides a computer program product including instructions. The computer program product may be software or a program product that includes the instructions and that can run on a compute device or be stored in any usable medium. When the computer program product runs on a compute device, the compute device is enabled to perform the method provided above, or the compute device is enabled to implement functions of the apparatus provided above.

An embodiment further provides a computer-readable storage medium. The computer-readable storage medium may be any usable medium that can be stored by a compute device, or a data storage device such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed on the compute device, the compute device is enabled to perform the method provided above.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with units and algorithm steps of the examples described in embodiments disclosed in this specification, this application can be implemented by electronic hardware or a combination of computer software and electronic hardware. Whether the functions are implemented by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A trusted execution environment TEE-based trusted compute platform, wherein the trusted compute platform comprises a compute part and a protection part, and the protection part comprises:
a trusted software base TSB; and
a trusted platform control module TPCM, wherein the TPCM comprises a TPCM functional component and a lightweight TPCM management component, the TPCM functional component is configured to perform security protection on the compute part, and the lightweight TPCM management component is configured to perform life cycle management on the TSB and the TPCM functional component.

2. The trusted compute platform according to claim 1, wherein the TPCM functional component is an independent TEE instance.

3. The trusted compute platform according to claim 1, wherein the TPCM functional component is a module in the lightweight TPCM management component, and the lightweight TPCM management component comprises the TPCM functional component.

4. The trusted compute platform according to any one of claims 1 to 3, wherein the lightweight TPCM management component further comprises a first communication module, and the first communication module is used for communication between the TSB and the compute part.

5. The trusted compute platform according to any one of claims 1 to 4, wherein the lightweight TPCM management component further comprises a second communication module, and the second communication module is used for communication between the TSB and the TPCM functional component.

6. The trusted compute platform according to any one of claims 1 to 5, wherein the TSB is configured to construct an independent TEE instance.

7. The trusted compute platform according to claim 6, wherein the trusted compute platform is a trusted compute platform based on an Arm Trustzone S-EL2 architecture, the lightweight TPCM management component is constructed based on a secure partition manager SPM, and the TEE instance is an independent secure partition SP.

8. The trusted compute platform according to claim 6, wherein the trusted compute platform is a trusted compute platform based on an Intel TDX architecture, the lightweight TPCM management component is constructed based on a TDX-module, and the TEE instance is an independent trusted domain TD.

9. The trusted compute platform according to any one of claims 1 to 8, wherein the lightweight TPCM management component is configured to perform, on the TSB and the TPCM functional component, any one or more of the following life cycle management: starting, interrupting, resuming, stopping, and destroying.

10. A method for executing a security protection task by a trusted compute platform, wherein the trusted compute platform comprises a compute part and a protection part, the protection part comprises a trusted software base TSB and a trusted platform control module TPCM, the TPCM comprises a TPCM functional component and a lightweight TPCM management component, and the method comprises:
receiving, by the lightweight TPCM management component, protection request information sent by the compute part, wherein the lightweight TPCM management component is configured to perform life cycle management on the TPCM functional component and the TSB;
sending, by the lightweight TPCM management component, the protection request information to the TSB;
invoking, by the TSB, the TPCM functional component to execute the protection task, wherein the TPCM functional component is configured to perform security protection on the compute part; and
sending, by the TSB, an execution result of the protection task to the compute part through the lightweight TPCM management component.

11. The method according to claim 10, wherein the TPCM functional component is an independent TEE instance.

12. The method according to claim 10, wherein the TPCM functional component is a module in the lightweight TPCM management component, and the lightweight TPCM management component comprises the TPCM functional component.

13. The method according to any one of claims 10 to 12, wherein the lightweight TPCM management component further comprises a first communication module, and the first communication module is used for communication between the TSB and the compute part; and sending, by the lightweight TPCM management component, the protection request information to the TSB comprises:
sending, by the lightweight TPCM management component, the protection request information to the TSB through the first communication module.

14. The method according to any one of claims 10 to 13, wherein the lightweight TPCM management component further comprises a second communication module, and the second communication module is used for communication between the TSB and the TPCM functional component; and
invoking, by the TSB, the TPCM functional component to execute the protection task comprises: invoking, by the TSB through the second communication module, the TPCM functional component to execute the protection task.

15. The method according to any one of claims 10 to 14, wherein the method further comprises: sending, by the TSB through the lightweight TPCM management component, a trusted control request to a TSB agent in the compute part, to enable the TSB agent to perform trusted control on the compute part based on the trusted control request.

16. The method according to any one of claims 10 to 15, wherein the TSB is configured to construct an independent TEE instance.

17. The method according to claim 16, wherein the trusted compute platform is a trusted compute platform based on an Arm Trustzone S-EL2 architecture, the lightweight TPCM management component is constructed based on a secure partition manager SPM, and the TEE instance is an independent secure partition SP.

18. The method according to claim 16, wherein the trusted compute platform is a trusted compute platform based on an Intel TDX architecture, the lightweight TPCM management component is constructed based on a TDX-module, and the TEE instance is an independent trusted domain TD.

19. The method according to any one of claims 10 to 18, wherein the lightweight TPCM management component is specifically configured to perform, on the TSB and the TPCM functional component, any one or more of the following life cycle management: starting, interrupting, resuming, stopping, and destroying.

20. A compute device cluster, comprising at least one compute device, wherein each compute device comprises a processor and a memory; and
the processor of the at least one compute device is configured to execute instructions stored in the memory of the at least one compute device, to enable the compute device cluster to perform the method according to any one of claims 10 to 19.

21. A computer program product comprising instructions, wherein when the instructions are run by a compute device cluster, the compute device cluster is enabled to perform the method according to any one of claims 10 to 19.

22. A computer-readable storage medium, comprising computer program instructions, wherein when the computer program instructions are executed by a compute device cluster, the compute device cluster is enabled to perform the method according to any one of claims 10 to 19.
